# EUROPEAN PATENT SPECIFICATION

(11) **EP 4 075 222 B1**
(45) Date of publication and mention of the grant of the patent: **11.12.2024**
(21) Application number: 22177685.9
(22) Date of filing: 24.02.2017
(51) Int. Cl.: G05B 19/43, F16K 7/00, F25B 21/00, F25B 21/02, G01N 15/06, G01N 33/48, F16K 3/02, B01L 1/00, F04B 43/12, F16K 11/065, F16K 11/074, F16K 11/076, F16K 99/00

(54) **MECHANICALLY DRIVEN SEQUENCING MANIFOLD**
MECHANISCH ANGETRIEBENER SEQUENZVERTEILER
COLLECTEUR DE SÉQUENÇAGE À ENTRAÎNEMENT MÉCANIQUE

(30) Priority: 24.02.2016 US 201662299486 P
(43) Date of publication of application: 19.10.2022
(62) Divisional of application: 17757384.7
(73) Proprietor: Levine, Leanna, Rancho Dominguez, CA 90220 (US)
(72) Inventor: LEVINE, Leanna, Rancho Dominguez, California CA 90220 (US); BEGOLO, Stefano, Rancho Dominguez (US); PODCZERVIENSKY, Justin, Rancho Dominguez (US)
(74) Representative: Maschio & Soames IP Ltd

(56) References cited:
- US-A- 2 980 137
- US-A- 3 150 517
- US-A- 3 678 959
- US-A- 4 493 476
- US-A- 5 367 912
- US-A1- 2004 112 441
- US-A1- 2015 027 547
- US-A1- 2016 047 491
- US-B1- 6 632 404

## Description

### Background

US3150517 discloses a gas chromatograph integrated valve.

### Attributes:

The physical embodiments of the sequencing manifolds of this invention have the following attributes:

### 1. Three Plate Configuration, Coaxial Inlet and Outlet Orifices

A mechanically driven sequencing manifold is comprised of three plates arranged face-to-face.

The outer two plates are to be maintained in fixed positions relative to each other. The outer two plates are designated Plate 1 and Plate 3. The inner plate is arranged to be translatable relative to the fixed plates. The inner plate is designated Plate 2.

The purpose of the arrangement of plates described above is to provide a temporal sequence of supply services to the pilot actuators of multiple diaphragm valves located on some fluid processing assembly in order to execute the functions of the fluid processing assembly. The additional purpose of this arrangement may be to provide a temporal sequence of supply services to the fluid handling channels within the fluid processing assembly. Depending upon the requirements of the fluid processing assembly, supply services may comprise some or all of the following: gases at sub-ambient pressures, gases at ambient pressure, gases at supra-ambient pressures, a vent to ambient pressure, as well as liquids at supra-ambient pressures. Collectively, these purposes will be referred to in the following descriptions of attributes as "supplying services to the fluid processing assembly".

Plate 1, Plate 2, and Plate 3 contain ports that conduct the flow of supply services. A port is comprised of an inlet orifice and an outlet orifice. All of the ports referred to in this configuration have coaxial inlet and outlet orifices.

Plate 1 is penetrated by supply ports for one, or more, supply services. A single supply service may be connected to multiple supply ports via connections external to the sequencing manifold. An alternate configuration of these devices that achieves a similar result is presented in descriptions 2c, 4, 5, and 7c, below, wherein multiple connections of supply services are made using transfer channels internal to Plate 1.

Plate 3 is penetrated by control ports for directing sequentially timed supply services to the fluid processing assembly.

Plate 2 is penetrated by sequence ports that connect supply ports in Plate 1 to control ports in Plate 3 in a specific temporal sequence determined by the amount of translation of Plate 2 relative to Plate 1 (or equivalently, relative to Plate 3). The sequence ports in Plate 2 penetrate the complete thickness of Plate 2 such that the inlet orifice and outlet orifice of the sequence ports are coaxial. The sequence posts have various shapes, so as to provide the delivery of supply services to the fluid processing assembly in the required temporal sequences and for the required durations. The combination of a supply port, a sequence port, and a control port that come into alignment on the sequencing manifold will be referred to as a sequencing gate.

Multiple sequencing gates may be ganged together on the sequencing manifold.

The minimum cross sectional area of the ports that comprise a sequencing gate and associated transfer channels are determined by the mass flows demanded from the supply services by the fluid processing assembly. Larger dimensions may be included in the design to provide for reserve capacities or to facilitate fabrication.

The purpose of a sequencing gate is to provide control pulses of specific times of initiation and durations. The time of initiation of a control pulse will be determined by the location of the sequence port on Plate 2 relative to the associated control and supply ports and the translational velocity of Plate 2. The duration of a control pulse will be determined by the dimension of a sequence port in a direction "parallel" to the translation vector of Plate 2 divided by the translational velocity of Plate 2. Thus, many combinations of port locations, port dimensions, and translational velocities will provide control pulses of the same specific times of initiation and durations. Certain of these combinations may be more readily fabricated than others.

The surfaces of the plates in contact with each other are to be lubricated or have a lubricious coating. The lubricant or lubricious coating must be compatible with the materials of construction of Plate 1, Plate 2, and Plate 3. The three plates are held in close proximity using a mechanical clamping arrangement. The clamping force must be great enough to prevent leakage of supply service along unintended pathways from exceeding acceptable maximums. The clamping force must be modest enough to allow lineal translation of Plate 2 relative to Plate 1 and Plate 3. One skilled in the mechanical arts can provide many different clamping arrangements that achieve these goals.

The locations of the supply ports in Plate 1 are subject to few geometric limitations. One skilled in the art will be able to arrange supply ports in multiple configurations on Plate 1 that ultimately provide the same sequence of supply services to the fluid processing assembly.

The locations and shapes of the control ports in Plate 3 are subject to more rigorous geometric limitations. One skilled in the art will be able to arrange control ports in multiple configurations on Plate 3 that ultimately provide the same sequence of supply services to the pilot fluid processing assembly.

The geometric arrangements of the sequence ports in Plate 2 are highly constrained by the locations selected for the supply ports in Plate 1. The geometric arrangement and shape of the sequence ports in Plate 2 are further constrained by the locations selected for the control ports in Plate 3 and by the temporal sequence of supply services to be delivered to the fluid processing assembly required to execute the functions of the fluid processing assembly. In general, sequence ports will be arranged in lines or arcs "parallel" to the translation vector applied to the plate or cylinder containing the sequence ports.

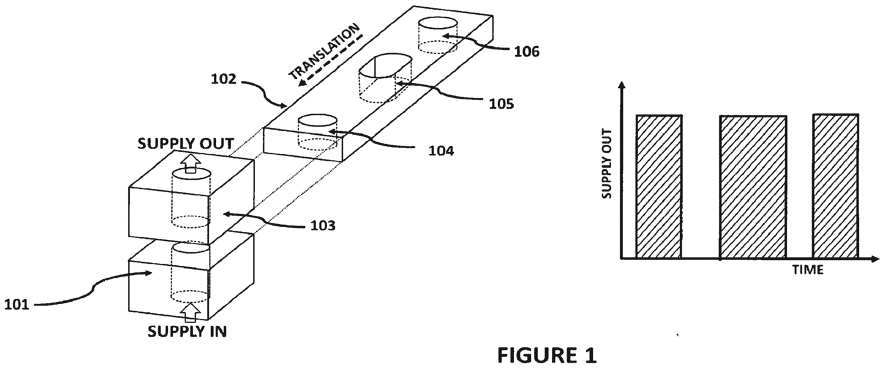

There will be multiple configurations of supply ports, sequence ports, and control ports that ultimately provide the same sequence of supply services to the fluid processing assembly. One skilled in the art of microfabrication will be able to select configurations of all ports that can be fabricated within the constraints of existing fabrication techniques and that minimize the lineal translation required to achieve the desired temporal sequence of supply services to be delivered to the fluid processing assembly. In preparation for operation of the sequencing manifold, the movable Plate 2 is brought to a reproducible initial position. During operation of the sequencing manifold, Plate 2 is then lineally translated past the fixed plates at a known linear velocity. In this manner, the various supply ports become connected to the various control ports through the sequence ports at specific times after initiation of lineal translation and for specific durations depending on the locations and shapes of the ports and the lineal velocity of translation. One skilled in the mechanical arts will be able to select actuator mechanisms suitable to provide the lineal translation of the movable Plate 2. The arrangement of supply, sequence, and control ports in the three plates that comprise a sequencing gate is depicted in Figures 1, Figure 2 and Figure 3.

### 2a. Three Plate Configuration, Non-Coaxial Sequence Orifices (not part of the claimed invention)

All of the attributes of the device of description 1 are retained, except the sequence ports in Plate 2 are comprised of an inlet orifice and an outlet orifice that are not coaxial, but rather, these orifices are laterally offset with respect to each other. The inlet orifice is on the side of the Plate 2 that is in apposition to the supply ports. The outlet orifice is on the side of the Plate 2 is in apposition to the control ports. The inlet and outlet orifices that comprise the sequence port are connected via a transfer channel contained within the Plate 2. One skilled in the art of micro fabrication can take multiple approaches to fabricating Plate 2 with this arrangement of inlet orifices, outlet orifices, and transfer channels

### 2b. Three Plate Configuration, Non-Coaxial Supply Orifices (not part of the claimed invention)

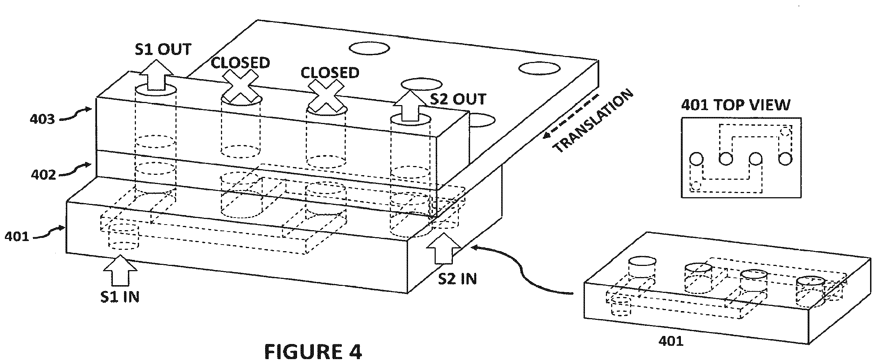

All of the attributes of the device of description 1 are retained, except the supply ports in Plate 1 are comprised of an inlet orifice and an outlet orifice that are not coaxial, but rather, these orifices are laterally offset with respect to each other. The outlet orifice is on the side of Plate 1 that is in apposition to the sequence ports in Plate 2. The inlet and outlet orifices that comprise the supply port are connected via a transfer channel contained within the Plate 1. Multiple outlet orifices may be connected via transfer channels to a single inlet orifice. One skilled in the art of micro fabrication can take multiple approaches to fabricating a plate with suitable arrangements of inlet orifices, outlet orifices, and transfer channels. Figure 4, provides a diagram of non-coaxial supply orifices with multiple outlet orifices connected via transfer channels to a single inlet orifice.

### 2c. Three Plate Configuration, Non-Coaxial Control Orifices (not part of the claimed invention)

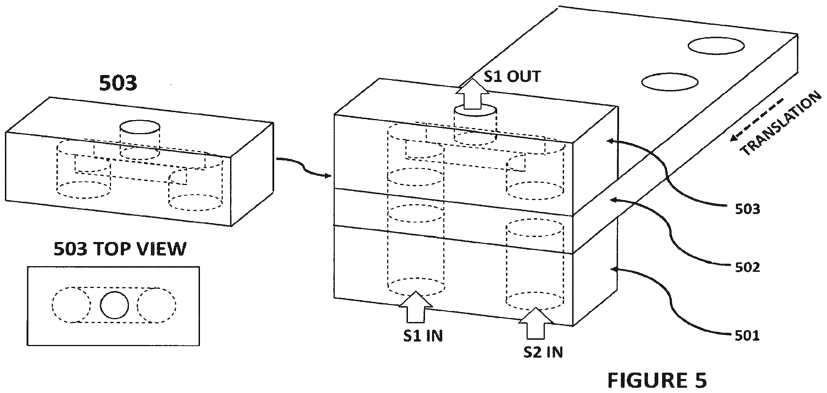

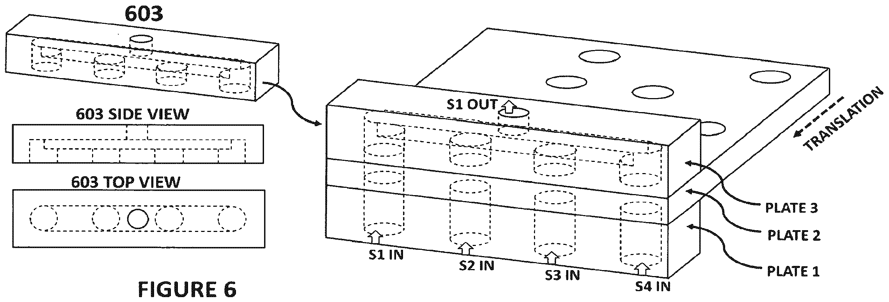

All of the attributes of the device of description 1 are retained, except the control ports in Plate 3 are comprised of an inlet orifice and an outlet orifice that are not coaxial, but rather, these orifices are laterally offset with respect to each other. The inlet orifice is on the side of Plate 3 that is in apposition to the sequence ports in Plate 2. The inlet and outlet orifices that comprise the control port are connected via a transfer channel contained within Plate 3. Multiple inlet orifices may be connected via transfer channels to a single outlet orifice of a control port. One skilled in the art of micro fabrication can take multiple approaches to fabricating a Plate 3 with this arrangement of inlet orifices, outlet orifices, and transfer channels. Figure 5 illustrates one arrangement of non-coaxial control orifices in Plate 3. Figure 6 depicts how the control ports of Figure 5 may be extended to accept additional supply services.

### 2d. Three Plate Configuration, Coaxial and Non-Coaxial Orifices (not part of the claimed invention)

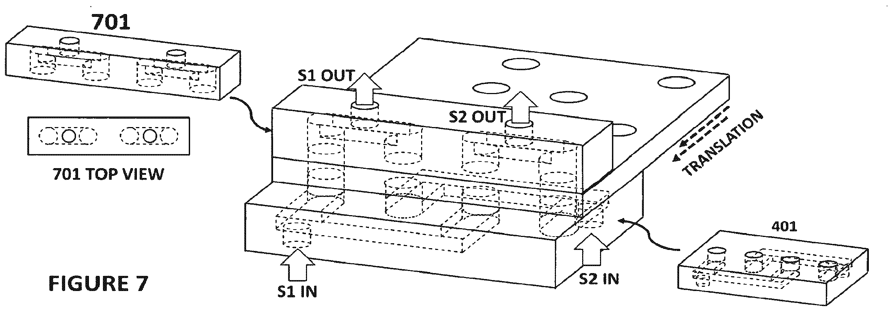

All of the attributes of the devices of descriptions 1, 2a, 2b, and 2c are retained, except that coaxial and non-coaxial orifices may be combined in a single device in all desired combinations. Figure 7 shows a combination of coaxial sequence orifices and non-coaxial supply and control orifices.

There will be multiple configurations of supply ports, sequence ports, and control ports that ultimately provide the same sequence of supply services to the fluid processing assembly. One skilled in the art of micro fabrication will be able to select configurations of all ports that can be fabricated within the constraints of existing fabrication techniques and that minimize the translation required to achieve the desired temporal sequence of supply services to be delivered to the fluid processing assembly.

### 3. Two Plate Configuration (not part of the claimed invention)

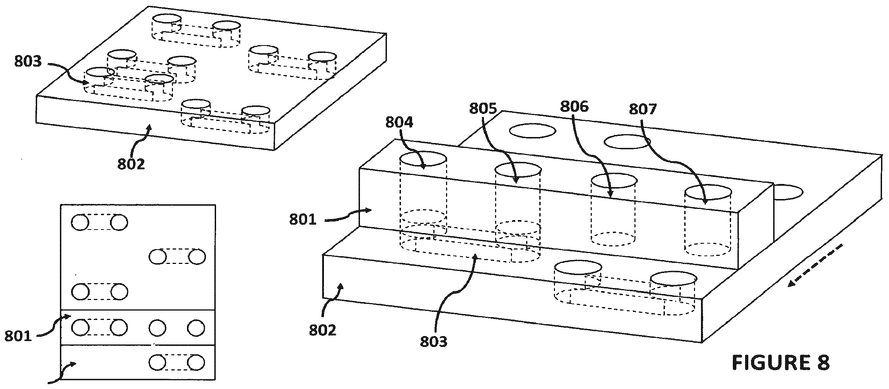

All of the attributes of the devices of description 2d are retained, except Plate 3 has been eliminated and both the supply ports and control ports are incorporated into Plate 1. The sequence ports in Plate 2 have an inlet orifice and an outlet orifice that are both on the face of Plate 2 that is in apposition to Plate 1. In this configuration, the inlet orifice and the outlet orifices that comprise a sequence port in Plate 2 are obligatorily non-coaxial and must be connected by a transfer channel contained within Plate 2. Figure 8 shows an example of the two plate configuration.

### 4. Three Plates Configuration, Coaxial and Non-Coaxial Orifices, rotational

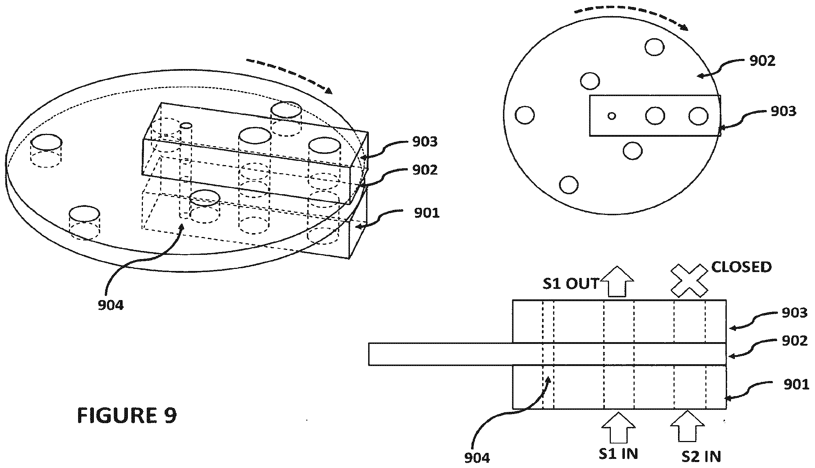

translation (not part of the claimed invention). All of the attributes of the devices of description 2d are retained, except rotational translation of Plate 2 is implemented instead of lineal translation of Plate 2. In general, sequence ports will be arranged along circular arcs as mandated by the rotational translation of Plate 2. Figure 9 illustrates implementation of the three plate configuration using rotational translation.

### 5. Two Plates Configuration, rotational translation (not part of the claimed invention).

All of the attributes of the devices of description 3 are retained, except rotational translation of Plate 2 is implemented instead of lineal translation of Plate 2. In general, sequence ports will be arranged along circular arcs as mandated by the rotational translation of Plate 2.

### 6. Three and two plates configuration, combined linear and rotational actuation (not part of the claimed invention)

All of the attributes of the devices of description 1, 2, 3, 4 and 5 are retained, except the actuation is a combination of lineal translation and rotational translation.

### 7. Three plates configuration, non-planar (not part of the claimed invention).

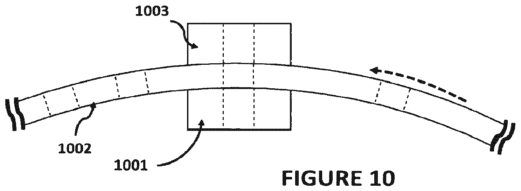

All of the attributes of the devices of description 1, 2, 4, and 6 are retained, except at least one of the plates is non-planar, such as a cylinder, portion of a cylinder, flexible layer or any combination. The three plates may be fabricated to sufficiently close tolerances as to prevent leakage of supply service along unintended pathways. Figure 10 illustrates implementation of the three plates configuration where the sequence plate is non-planar.

### 8. Two plate configuration, non-planar (not part of the claimed invention).

All of the attributes of the devices of description 3 and 5 are retained, except at least one of the plates is non-planar, such as a cylinder, portion of a cylinder, flexible layer or any combination.

The two plates may be fabricated to sufficiently close tolerances as to prevent leakage of supply service along unintended pathways. Examples

### Example 1: Use of sliding manifold to control diaphragm valve.

A sliding manifold with the geometry depicted in figure 5 (not part of the claimed invention) was used to control a diaphragm valve.

In this example the supplies used were positive pressure (S1 = +48.3 kPa (+7psi)) and vacuum (S2 =-48.3 kPa (-7psi)).

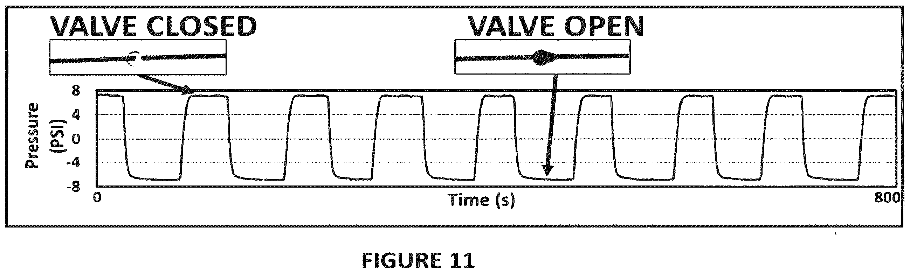

The program plate was designed in order to supply alternatively S1 to close the diaphragm valve or S2 to open the diaphragm valve. Figure 11 shows the temporal pressure profile and images of the open and closed diaphragm valve actuated by the manifold.

### Example 2: Use of sliding manifold to control three diaphragm valves in parallel and achieve peristaltic pumping.

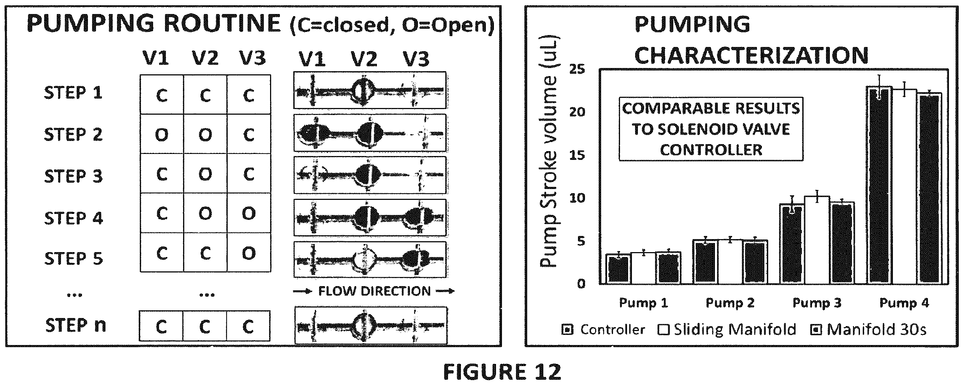

A sliding manifold with a geometry comprising three repetitions of the device depicted in figure (not part of the claimed invention) was used to control three diaphragm valves in parallel. In this example the supplies used were positive pressure (S1 = +48.3 kPa (+7psi)) and vacuum (S2 = -48.3 kPa (-7psi)). The program plate was designed in order to supply alternatively S1 or S2 to each of the diaphragm valve. The sequence of operations in the program plate allow for actuation of the pumping routine described in Figure 12. Figure 12 also shows the valves actuated by the pumping sequence with the direction of flow. Performances of peristaltic pumping did not change when comparing actuation by a standard pneumatic controller, sliding manifold and sliding manifold with 30s pauses between each step (Figure 12).

### Example 3: Use of sliding manifold to implement multistep protocol in fluid processing assembly.

A sliding manifold comprising sixteen repetitions of the geometry depicted in figures 1 and 2 was used to control 8 independent control ports (non-coaxial) and 5 independent supply ports (non-coaxial). This sliding manifold was used to implement a 12 steps protocol for controlling a fluid processing assembly capable of metering two volumes of liquid, mixing, de-bubbling and dispensing. The sequence of operation is described in Figure 13.

### Figure 1. Temporal Output of Control Pulses from a Sequencing Gate Determined by the Translation of Sequence Ports

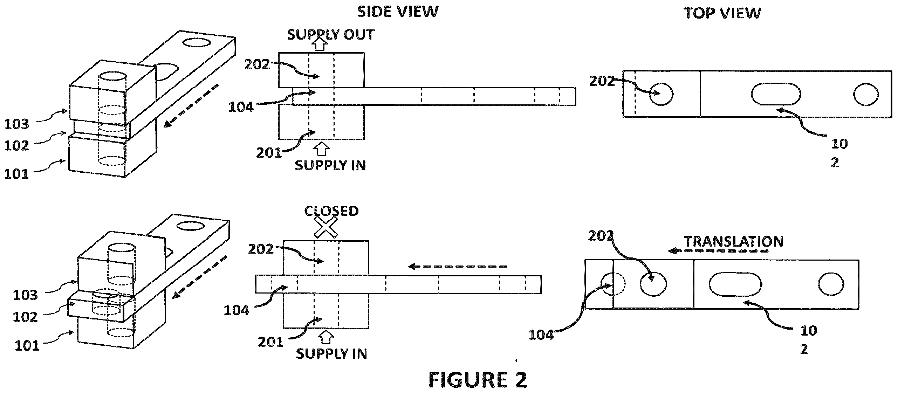

Figure 1 depicts only restricted segments of Plate 1 (101), Plate 2 (102), or Plate 3 (103). The full lateral extent of each plate has been omitted for the sake of clarity. As Plate 2 (102) translates past the supply port (201) in Plate 1 (101) and the control port (203) in Plate 3(103), a temporal sequence of supply service pulses is produced as indicated in the graph on the right. The physical locations of sequence ports (104, 105, 106) in Plate 2 and the translational velocity determines the temporal sequence of when each control pulse is initiated. The dimension of each sequence port parallel to the translation vector and the translational velocity determines how long each control pulse persists. The alignments of supply, sequence, and control ports that comprise a sequencing gate is shown in cross section in Figure 2.

### Figure 2. Cross Sectional View of the Alignments of Supply, Sequence and Control Ports During Functioning of a Sequencing Gate

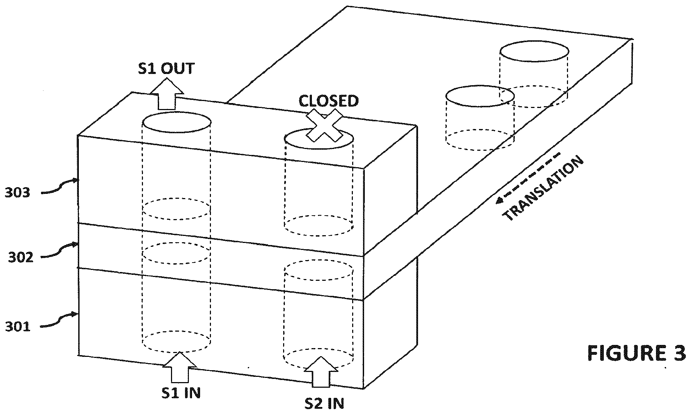

### Figure 3. Two Ganged Sequencing Gates on a Single Sequencing Manifold.

Figure 3 illustrates how multiple control outputs to different functions on the fluid processing assembly may be obtained by ganging sequencing gates side-by-side on Plate 1 (301), Plate 2 (302), and Plate 3 (303). In this figure, two sequencing gates are ganged, but this design strategy may be extended to larger numbers of sequencing gates on a single sequencing manifold.

### Figure 4. Supply Ports with Non-Coaxial Orifices and Internal Transfer Channels (not part of the claimed invention)

The sequencing gates in Figure 4 are designated 1 through4, from left to right. While supply service, S1, is applied to gates 1 and 3, only control port 1 is active because the sequence port for gate 3 has not yet come into alignment. Similarly, only control port 4 is active in Figure 4.

### Figure 5. Control Ports with Non-Coaxial Orifices (not part of the claimed invention)

Figure 6 depicts how the control ports of Figure 5 may be extended to accept additional supply services. As depicted, the arrangement in Figure 6 comprises a 4-state sequence gate wherein the initiation and duration of each supply state is determined by the physical locations of the sequence ports in Plate 2 (602). The design strategy of Figure 6 can be extended to arbitrary combinations of supply inputs through sequence ports to multi-state control outputs.

### Figure 6. Four Supply Inputs Configured to Provide a 4-State Sequencing Gate (not part of the claimed invention)

### Figure 7. Three Plate Configuration with Non-Axial Orifices in the Supply and Control

Ports (not part of the claimed invention). Figure 7 shows a combination of four sequencing gates with two supply inputs and four independent control outputs. The gates are activated by lineal translation of the sequence plate, Plate 2 (702).

### Figure 8. Two Plate Configuration (not part of the claimed invention)

Figure 8 provides a diagram of the two plate configuration, where supply ports (804, 807) and control ports (805, 806) are incorporated into plate 1 (801). The sequence ports (803) in Plate 2 (802) are non-coaxial and connected by a transfer channel contained within Plate 2.

### Figure 9. Three Plate Configuration, rotational actuation (not part of the claimed invention)

Figure 9 illustrates implementation of the three plate configuration using rotational translation. Rotational actuation of Plate 2 (902) relative to Plate 1 (901) and Plate 3 (903) is performed. A central pin (904) can be used to guide the rotational actuation.

### Figure 10: Three Plate configuration, non-planar actuation (not part of the claimed invention)

Figure 10 illustrates implementation of the non-planar three Plates configuration. A side view shows planar Plate 1 (1001) and Plate 3 (1003), with a non-planar Plate 2 (1002). Actuation is implemented in a non-planar fashion along the translation arrow.

### Figure 11: Use of sliding manifold to control a diaphragm valve.

### Figure 12: Use of sliding manifold to control three diaphragm valves in parallel and achieve peristaltic pumping.

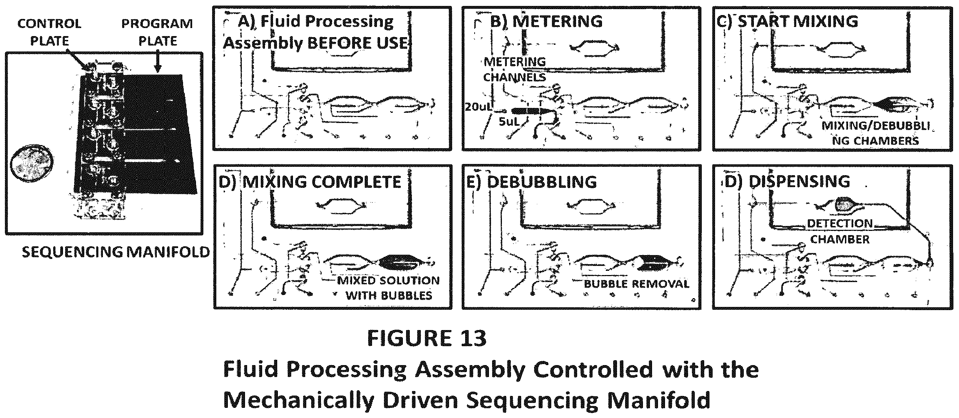

### Figure 13: Use of sliding manifold to implement multistep protocol in fluid processing assembly.

### Summary:

The present invention provides a sequencing manifold for supply of one or more supply services to a fluid processing assembly in a temporal sequence of supply service pulses as recited in claim 1.

The sequencing manifolds described in this application provide a means of managing sequenced fluid movements in a fluid processing assembly without the use of electromechanical components. The moving parts in the sequencing manifold program the sequence of supply services to the fluid processing assembly in a pre-programmed and controlled manner. The requirements for operation is the application of a mechanical force to drive the moving parts along the sequence of orifices that provide intermittent connections to the supply ports connected to the fluid processing assembly. The mechanical force can be provided by any of a number of non-electrical mechanisms including as an example, springs or manual operation. By managing the direction of movement of the moving parts in the manifold, the overall size of the sequencing manifold can minimized to meet the need for portability and application in a remote environment.

## Claims

1. A sequencing manifold for supply of one or more supply services to a fluid processing assembly in a temporal sequence of supply service pulses, the sequencing manifold comprising:
a first plate (101) having one or more supply ports (201) penetrating the first plate;
a third plate (103) having one or more control ports (203) penetrating the third plate; and a second plate (102) having a plurality of sequence ports (104, 105, 106) penetrating a complete thickness of the second plate, the plurality of sequence ports being arranged in sequence in the second plate to connect the supply ports in the first plate to the control ports in the third plate, each sequence port having a shape with a dimension so as to provide delivery of supply services in a temporal sequence for a duration, wherein
the first plate (101), the third plate (103) and the second plate (102) are arranged face-to- face with the first plate and the third plate being outer plates, and the second plate being positioned as an inner plate between the first plate and the third plate and translatable relative to the first plate and the third plate, which are maintained in fixed positions relative to each other, and
the supply ports (201), the control ports (203), and the sequence ports (104, 105, 106) contained within the plates are comprised of an inlet orifice and an outlet orifice that form a sequencing gate to conduct the flow of supply services when the combination of the supply port, the sequence port, and the control port come into alignment to form the sequencing gate,
wherein all of the supply ports (201), control ports (203) and sequence ports (104, 105, 106) have coaxial inlet and outlet orifices; and
wherein, the second plate, from an initial position, translates, in a lineal direction past the first plate and the third plate at a known linear velocity to align a first supply port on the first plate with a first of the plurality of sequence ports on the second plate, and with a first control port on the third plate to form a first sequencing gate to conduct the flow of supply services to the fluid processing assembly, and
wherein, the second plate (102) further translates in a lineal direction past the first plate (101) and the third plate (103) at a known linear velocity to close the first sequence gate, and
wherein, the second plate (102) further translates in a lineal direction past the first plate and the third plate at a known linear velocity to align the first supply port on the first plate and the first control port on the third plate with a second, and third sequence ports of the plurality of sequence ports on the second plate to form second, and third sequencing gates to conduct the flow of supply services to the fluid processing assembly through the formation and closing of the sequencing gates as the second plate translates in a lineal direction past the first and third plates to provide the temporal sequence of supply service pulses, and
wherein the sequencing gates provide the temporal sequence of supply service pulses by providing control pulses of specific times of initiation and durations, wherein
the time of initiation of a control pulse is determined by the location of the first, second, and third sequence port (104, 105, 106) on the second plate (102) relative to the control port (203) and the supply port (201) and the translational velocity of the second plate, and wherein
the duration of the control pulse is determined by the dimension of the sequence port in a direction parallel to the translation vector of the second plate divided by the translational velocity of the second plate.

2. The sequencing manifold of claim 1, wherein multiple individual sequencing gates are ganged together.

3. The sequencing manifold of claim 1, wherein each of the plurality sequence ports in the second plate (102) comprise an inlet orifice and an outlet orifices, which, taken together form a sequence port, the plurality of sequence ports being the same dimension or different dimensions.

4. The sequencing manifold of claim 1, wherein the face of the first plate (101), second plate (102), and third plate (103) that in contact with each other have a lubricant or lubricious coating.

5. The sequencing manifold of claim 1, wherein the face of the first plate (101), second plate (102), and third plate (103) that in contact with each other have a lubricant or lubricious coating to provide reduced friction between the moving parts.

## Patentansprüche

1. Sequenzverteiler zum Versorgen einer Fluidverarbeitungsbaugruppe mit einem oder mehreren Versorgungsdiensten in einer zeitlichen Abfolge von Versorgungsdienstpulsen, wobei der Sequenzverteiler Folgendes umfasst:
eine erste Platte (101), die eine oder mehrere Versorgungsöffnungen (201) aufweist, die durch die erste Platte dringen;
eine dritte Platte (103), die eine oder mehrere Steueröffnungen (203) aufweist, die durch die dritte Platte dringen; und eine zweite Platte (102), die eine Vielzahl von Sequenzöffnungen (104, 105, 106) aufweist, die durch eine vollständige Dicke der zweiten Platte dringen, wobei die Vielzahl von Sequenzöffnungen in Sequenz in der zweiten Platte angeordnet ist, um die Versorgungsöffnungen in der ersten Platte mit den Steueröffnungen in der dritten Platte zu verbinden, wobei jede Sequenzöffnung eine Form mit einer Abmessung aufweist, um eine Abgabe von Versorgungsdiensten in einer zeitlichen Abfolge für eine Dauer bereitzustellen, wobei
die erste Platte (101), die dritte Platte (103) und die zweite Platte (102) gegenüberliegend angeordnet sind, wobei die erste Platte und die dritte Platte äußere Platten sind und die zweite Platte als eine innere Platte zwischen der ersten Platte und der dritten Platte positioniert ist und relativ zu der ersten Platte und der dritten Platte verschiebbar ist, die relativ zueinander in fixierten Positionen gehalten werden, und
die Versorgungsöffnungen (201), die Steueröffnungen (203) und die Sequenzöffnungen (104, 105, 106), die innerhalb der Platten enthalten sind, aus einer Einlassmündung und einer Auslassmündung bestehen, die ein Sequenzgatter bilden, um den Strom von Versorgungsdiensten zu leiten, wenn die Kombination der Versorgungsöffnung, der Sequenzöffnung und der Steueröffnung in Ausrichtung gelangen, um das Sequenzgatter zu bilden,
wobei alle der Versorgungsöffnungen (201), Steueröffnungen (203) und Sequenzöffnungen (104, 105, 106) koaxiale Einlass- und Auslassmündungen aufweisen; und
wobei sich die zweite Platte von einer Anfangsposition in einer linearen Richtung an der ersten Platte und der dritten Platte mit einer bekannten linearen Geschwindigkeit vorbeibewegt, um eine erste Versorgungsöffnung auf der ersten Platte mit einer ersten der Vielzahl von Sequenzöffnungen auf der zweiten Platte und einer ersten Steueröffnung auf der dritten Platte auszurichten, um ein erstes Sequenzgatter zu bilden, um den Strom von Versorgungsdiensten zu der Fluidverarbeitungsbaugruppe zu leiten, und
wobei sich die zweite Platte (102) weiter in einer linearen Richtung an der ersten Platte (101) und der dritten Platte (103) mit einer bekannten linearen Geschwindigkeit vorbeibewegt, um das erste Sequenzgatter zu schließen, und
wobei sich die zweite Platte (102) weiter in einer linearen Richtung an der ersten Platte und der dritten Platte mit einer bekannten linearen Geschwindigkeit vorbeibewegt, um die erste Versorgungsöffnung auf der ersten Platte und die erste Steueröffnung auf der dritten Platte mit einer zweiten und dritten Sequenzöffnung der Vielzahl von Sequenzöffnungen auf der zweiten Platte auszurichten, um zweite und dritte Sequenzgatter zu bilden, um den Strom von Versorgungsdiensten zu der Fluidverarbeitungsbaugruppe durch die Formation zu leiten, und die Sequenzgatter zu schließen, wenn sich die zweite Platte in einer linearen Richtung an der ersten und dritten Platte vorbeibewegt, um die zeitliche Sequenz von Versorgungsdienstpulsen bereitzustellen, und
wobei die Sequenzgatter die zeitliche Sequenz von Versorgungsdienstpulsen bereitstellen, indem Steuerpulse mit spezifischen Einleitungszeiten und Dauern bereitgestellt werden, wobei
die Einleitungszeit eines Steuerpulses durch die Stelle der ersten, zweiten und dritten Sequenzöffnung (104, 105, 106) auf der zweiten Platte (102) relativ zu der Steueröffnung (203) und der Versorgungsöffnung (201) und der Verschiebungsgeschwindigkeit der zweiten Platte bestimmt wird, und wobei
die Dauer des Steuerpulses durch die Abmessung der Sequenzöffnung in einer Richtung parallel zu dem Verschiebungsvektor der zweiten Platte geteilt durch die Verschiebungsgeschwindigkeit der zweiten Platte bestimmt wird.

2. Sequenzverteiler nach Anspruch 1, wobei mehrere individuelle Sequenzgatter miteinander verbunden sind.

3. Sequenzverteiler nach Anspruch 1, wobei jede der Vielzahl von Sequenzöffnungen in der zweiten Platte (102) eine Einlassöffnung und eine Auslassöffnung umfasst, die miteinander eine Sequenzöffnung bilden, wobei die Vielzahl von Sequenzöffnungen dieselbe Abmessung oder unterschiedliche Abmessungen aufweist.

4. Sequenzverteiler nach Anspruch 1, wobei die Fläche der ersten Platte (101), zweiten Platte (102) und dritten Platte (103), die miteinander in Kontakt sind, ein Schmiermittel oder eine schmierfähige Beschichtung aufweisen.

5. Sequenzverteiler nach Anspruch 1, wobei die Fläche der ersten Platte (101), zweiten Platte (102) und dritten Platte (103), die miteinander in Kontakt sind, ein Schmiermittel oder eine schmierfähige Beschichtung aufweisen, um verringerte Reibung zwischen den beweglichen Teilen bereitzustellen.

## Revendications

1. Collecteur de séquençage destiné à fournir un ou plusieurs services d'alimentation à un ensemble de traitement de fluide dans une séquence temporelle d'impulsions de services d'alimentation, le collecteur de séquençage comprenant :
une première plaque (101) présentant un ou plusieurs ports d'alimentation (201) pénétrant dans la première plaque ;
une troisième plaque (103) présentant un ou plusieurs ports de commande (203) pénétrant dans la troisième plaque ; et une deuxième plaque (102) présentant une pluralité de ports de séquence (104, 105, 106) pénétrant dans une épaisseur complète de la deuxième plaque, la pluralité de ports de séquence étant disposés en séquence dans la deuxième plaque pour relier les ports d'alimentation de la première plaque aux ports de commande de la troisième plaque, chaque port de séquence présentant une forme et une dimension permettant de fournir des services d'alimentation dans une séquence temporelle pendant une certaine durée, dans laquelle
la première plaque (101), la troisième plaque (103) et la deuxième plaque (102) sont disposées face à face, la première plaque et la troisième plaque étant des plaques extérieures, et la deuxième plaque étant positionnée comme une plaque intérieure entre la première plaque et la troisième plaque et pouvant être déplacée par rapport à la première plaque et à la troisième plaque qui sont maintenues dans des positions fixes l'une par rapport à l'autre, et
les ports d'alimentation (201), les ports de commande (203), et les ports de séquence (104, 105, 106) contenus dans les plaques comprennent un orifice d'entrée et un orifice de sortie qui forment une porte de séquençage pour conduire le flux de services d'alimentation lorsque la combinaison du port d'alimentation, du port de séquence et du port de commande s'aligne pour former la porte de séquençage,
dans lequel tous les ports d'alimentation (201), les ports de commande (203) et les ports de séquence (104, 105, 106) présentent des orifices d'entrée et de sortie coaxiaux ; et
dans lequel la deuxième plaque, à partir d'une position initiale, se déplace dans une direction linéaire au-delà de la première plaque et de la troisième plaque à une vitesse linéaire connue pour aligner un premier port d'alimentation sur la première plaque avec un premier de la pluralité de ports de séquence sur la deuxième plaque, et avec un premier port de commande sur la troisième plaque pour former une première porte de séquençage pour conduire le flux de services d'alimentation vers l'ensemble de traitement des fluides, et
dans lequel la deuxième plaque (102) se déplace en outre dans une direction linéaire au-delà de la première plaque (101) et de la troisième plaque (103) à une vitesse linéaire connue pour fermer la première porte de séquence, et
dans lequel la deuxième plaque (102) se déplace en outre dans une direction linéaire au-delà de la première plaque et de la troisième plaque à une vitesse linéaire connue pour aligner le premier port d'alimentation sur la première plaque et le premier port de commande sur la troisième plaque avec un deuxième et un troisième ports de séquence de la pluralité de ports de séquence sur la deuxième plaque pour former les deuxième et troisième portes de séquençage pour conduire le flux de services d'alimentation à l'ensemble de traitement de fluide par la formation et la fermeture des portes de séquençage lorsque la deuxième plaque se déplace dans une direction linéaire au-delà de la première et de la troisième plaque pour fournir la séquence temporelle d'impulsion de service d'alimentation, et
dans lequel les portes de séquençage fournissent la séquence temporelle d'impulsions de service d'alimentation en fournissant des impulsions de commande à des moments d'initiation et des durées spécifiques, dans lequel
le moment de l'initiation d'une impulsion de commande est déterminé par l'emplacement du premier, du deuxième et du troisième port de séquence (104, 105, 106) sur la deuxième plaque (102) par rapport au port de commande (203) et au port d'alimentation (201) et par la vitesse de translation de la deuxième plaque, et dans lequel
la durée de l'impulsion de commande est déterminée par la dimension du port de séquence dans une direction parallèle au vecteur de translation de la deuxième plaque, divisée par la vitesse de translation de la deuxième plaque.

2. Collecteur de séquençage selon la revendication 1, dans lequel plusieurs portes de séquençage individuelles sont regroupées.

3. Collecteur de séquençage selon la revendication 1, dans lequel chacun de la pluralité de ports de séquence de la seconde plaque (102) comprend un orifice d'entrée et un orifice de sortie qui, ensemble, forment un port de séquence, la pluralité de ports de séquence étant de la même dimension ou de dimensions différentes.

4. Collecteur de séquençage selon la revendication 1, dans lequel les faces de la première plaque (101), de la deuxième plaque (102) et de la troisième plaque (103) en contact les unes avec les autres présentent un lubrifiant ou un revêtement lubrifiant.

5. Collecteur de séquençage de la revendication 1, dans lequel les faces de la première plaque (101), de la deuxième plaque (102) et de la troisième plaque (103) en contact les unes avec les autres présentent un lubrifiant ou un revêtement lubrifiant pour réduire la friction entre les pièces mobiles.
